Europäisches Patentamt

European Patent Office

Office européen des brevets

(11) Veröffentlichungsnummer: **0 079 509**

**A1**

## EUROPÄISCHE PATENTANMELDUNG

(21) Anmeldenummer: **82110045.0**

(22) Anmeldetag: **30.10.82**

(51) Int. Cl.³: **B 65 D 85/30**
**B 60 P 1/48**

(30) Priorität: **10.11.81 DE 3144607**

(43) Veröffentlichungstag der Anmeldung:
**25.05.83 Patentblatt 83/21**

(84) Benannte Vertragsstaaten:
**AT BE CH DE FR GB IT LI NL**

(71) Anmelder: **Mathis Systemtechnik GmbH**
**Rimsingerstrasse 1**
**D-7801 Merdingen(DE)**

(72) Erfinder: **Mathis, Paul**
**Rimsinger Strasse 1**
**D-7801 Merdingen(DE)**

(72) Erfinder: **Mathis, Franz**
**Rimsingerstrasse 3**
**D-7801 Merdingen(DE)**

(74) Vertreter: **Schmitt, Hans, Dipl.-Ing. et al,**
**Dreikönigstrasse 13**
**D-7800 Freiburg(DE)**

(54) **Mit einem Lastfahrzeug verfahrbarer Silo oder Behälter.**

(57) Ein mit einem Lastfahrzeug (2) verfahrbarer Silo (1) mit Füßen (5, 6) kann etwa horizontal auf dem Fahrzeug (2) liegen und über Ketten (9) sowie eine fahrzeugseitige Kupplung (12) durch Hochschwenken eines mit dem Fahrzeug (2) verbundenen Schwenkarmes (7) senkrecht abgesetzt werden. Dabei sind lediglich zwei Befestigungsstellen (10a, 10b) für Ketten (9) an den freien Enden (18) der Schwenkarme (7) des Fahrzeuges (2) erforderlich und die Kupplung (12) am Fahrzeugende (11) ist bevorzugt als Längsführung (14) ausgebildet.

Fig 1

Croydon Printing Company Ltd.

EP 0 079 509 A1

Firma
Mathis System-Technik GmbH
7801 Merdingen

E 82 455 MR

Mit einem Lastfahrzeug verfahrbarer Silo oder Behälter

Beschreibung

Die Erfindung betrifft einen mit einem Lastfahrzeug verfahrbaren Silo oder Behälter für Schütt-, fließfähiges
oder flüssiges Gut mit einem unteren Ablaß und diesen
bei aufgestelltem Behälter in Abstand zur Standfläche
haltenden Füßen, einem Standgestell od. dgl., wobei der
Behälter oder Silo an sich gegenüberliegenden Seiten jeweils Aufhänge- oder Befestigungsstellen zum Aufhängen
an parallelen, einander gegenüberliegenden Schwenkarmen
des Lastfahrzeuges mittels Zugelementen aufweist, so daß
die Schwenkarme bei ihrer Verschwenkung um eine etwa am
Ende des Fahrzeuges befindliche horizontale Achse den
Silo aufnehmen und/oder absetzen können, wobei ferner
im Bereich der Schwenkachse der Schwenkarme eine Halterung oder Kupplung zum Erfassen einer Gegenkupplung an
dem Behälter unterhalb von den Aufhängepunkten vorgesehen ist.

Ein Lastfahrzeug der vorerwähnten Art ist aus der DE-OS
14 55 635 bekannt. Es dient vor allem zur Beförderung
sogenannter Mulden, die entweder in horizontaler Position gemäß ihrer Stellung auf der Ladefläche abgeladen
werden können sollen oder die zum Entleeren am Fahrzeugende gehalten und dann hochgeschwenkt und somit ausgekippt werden können sollen. Diese Anordnung ist für den
liegenden Transport eines vorzugsweise gefüllt transportierbaren Behälters dann nicht geeignet, wenn der Behälter nach dem Abladen um 90° verschwenkt stehen soll.

Zwar ist in der DE-OS 14 55 635 auch eine Anordnung beschrieben, die den liegenden Transport eines Behälters mit demselben Fahrzeug gestatten soll. Dazu benötigt das Fahrzeug dann jedoch einen weiteren Arm, der am in Fahrtrichtung vorderen und in Funktionsstellung oberen Ende des Silobehälters angreifen soll. Für diesen zusätzlichen Schwenkarm sind entsprechende Betätigungsmittel notwendig und an dem Silobehälter muß vor allem für ein gefülltes Transportieren eine aufwendige Aufhängevorrichtung vorgesehen werden.

Es ist auch aus der DE-AS 21 48 048 eine Vorrichtung der eingangs erwähnten Art bekannt, bei der das Fahrzeug nur zwei einander gegenüberliegende Schwenkarme hat, an denen dann der liegende Behälter über drei Anhängestellen und Zugelemente befestigt wird. Zusätzlich ist die eingangs erwähnte Halterung im unteren Behälterbereich am Fahrzeugende erforderlich. Dabei sollen zwei Anhängestellen unter der Längsmittelebene des liegenden Behälters auf gleicher Höhe angeordnet sein. Die untere Halterung ist ein Haken, mit dem der Behälter an einem entsprechenden Gegenkupplungsteil erfaßt wird, um welches der Behälter also beim Auf- oder Abladen geschwenkt werden muß. Zusätzlich ist der Haken selbst schwenkbar, um ein Absetzen zu erleichtern.

Beim Auf- und Abladen müssen auf jeder Seite des Behälters drei Befestigungsstellen mit entsprechenden Zugelementen bedient werden und wenn dabei eine dieser insgesamt sechs Aufhängestellen nicht sorgfältig beachtet wird, besteht die Gefahr, daß vor allem beim Handhaben eines gefüllten Behälters die übrigen Zugelemente überlastet werden. Auch sind dann aus der waagerechten in die vertikale Posotopn starke Schläge oder Stöße zu befürchten.

Es besteht deshalb die Aufgabe, einen mit einem Fahrzeug verfahrbaren Behälter der eingangs erwähnten Art zu schaffen, bei dem die Verbindung mit einem Fahrzeug vereinfacht ist, so daß sie auch in der relativ großen Höhe des stehenden Behälters einfach durchgeführt werden kann. Gleichzeitig soll der konstruktive Aufwand vermindert werden. Dennoch soll ein ruckfreier Übergang aus der waagerechten Position von der Ladefläche des Fahrzeuges in die vertikale Aufstellposition und umgekehrt möglich sein.

Die Lösung dieser Aufgabe besteht im wesentlichen darin, daß der Behälter od. dgl. an den einander gegenüberliegenden Seiten jeweils nur zwei Befestigungsstellen zum Anbringen der Zugelemente aufweist, wobei jeweils eine bei stehendem Behälter höhere Befestigungsstelle an diesem etwa in dessen Längsmitte und die zweite Aufhängestelle bei auf dem Fahrzeug liegendem Behälter höher als die erste Anhängestelle, in Fahrtrichtung jedoch weiter hinten als diese angeordnet sind, und daß die Gegenkupplung des Behälters zum Verbinden mit dem hinteren Fahrzeugbereich an der Seite des Behälters angeordnet ist, die bei auf dem Fahrzeug liegendem Behälter unten ist.

Durch die vorbeschriebene Anordnung ergeben sich auf jeder Behälterseite nur zwei Anhängepunkte oder Befestigungsstellen, so daß entsprechend weniger Zugelemente eingehängt werden müssen. Dadurch wird nicht nur die Gefahr vermindert, daß eine Befestigungsstelle einmal vergessen wird, sondern es wird auch die Gefahr von Verwechslungen der verschiedenen Zugelemente erheblich vermindert. Müssen drei Zugelemente angehängt werden, könnte vor allem ein weniger geübter Benutzer einmal ein falsches Zugelement an der falschen Anhängestelle anbringen. Bei der Handhabung von mehreren Tonnen schweren Behältern könnte dies unübersehbare Folgen haben.

Die Anordnung einer Befestigungsstelle etwa in der Längsmitte des Behälters hat dabei den Vorteil, daß bei weitgehend vertikaler Anordnung des Behälters ein definierter Kraftangriff überwiegend an dieser Befestigungsstelle gegeben sein wird. Die zweite Anhängestelle sorgt dem gegenüber für eine Stabilisierung während des Anhebens und Schwenkens des Behälters, was durch die Gegenkupplung unterstützt wird. Insgesamt sind auf jeder Seite des Behälters nur drei Befestigungspunkte wirksam, was auch statisch erwünscht ist.

Eine Ausgestaltung der Erfindung von eigener schutzwürdiger Bedeutung kann darin bestehen, daß die am Fahrzeugende angeordnete Halterung zum zeitweiligen Kuppeln mit dem Behälter insbesondere während des Aufnhemens, Haltens und Abladens als etwa in Fahrtrichtung bzw. schräg gegen den Boden hinter dem Fahrzeug gerichtete oder in diese Richtung schwenkbare Führung, insbesondere Langlochführungen ausgebildet ist. Gegenüber der Verbindung mit einem Haken, an dem der Behälter in fester Position bleibt, ist so eine Anpassung des unteren hinteren Behälterbereiches während des Anhebens insbesondere in seiner weitgehend waagerechten Position möglich. In dieser Position kann der Behälter weitgehend von den beiden dann gespreizt zueinander stehenden Zugelementen hängen und die Verschwenkung der Schwenkarme führt zu einer entsprechenden Längsverschiebung des Behälters, wobei die durch die Schwenkbewegung gleichzeitig bewirkte vertikale Komponente durch eine entsprechende Anpassung der schwenkbaren Längsführung ausgeglichen wird. In vorteilhafter Weise kann der Behälter somit beim Aufladen in der letzten Phase der Bewegung in Fahrtrichtung nach vorne gezogen werden, während er beim Abladen mit seiner Gegenkupplung weiter nach hinten und somit besser aus dem Fahrzeugumriß gelangt, so daß einerseits in Fahrposition die Last des Behälters möglichst günstig weiter vorne auf dem Fahrzeug angeordnet ist, während beim Abladen der gesamte Behälter nach hinten aus dem Fahrzeugumriß herausgebracht werden kann.

Dabei kann die Langlochführung für die untere, fahrzeugnahe Befestigung des Behälters zum Ein- und Auskuppeln öffenbar sein, insbesondere als obere Begrenzung ihres Langschlitzes einen auf- und abklappbaren und in Schließstellung lösbar fixierbaren Bügel aufweisen. Dies ergibt eine einfache und dennoch sichere Konstruktion, wobei der untere, beim Handhaben des Behälters stärker belastete Bereich der Führung entsprechend stark ist, weil das Öffnen der Führung in deren oberen, weitgehend unbelasteten Bereich verlegt ist.

Zweckmäßigerweise sind dabei im unteren Bereich des Behälters an seiner dem Fahrzeug abgewandten Seite zwei Kupplungsstellen für zwei vorzugsweise parallele schwenkbare Langlochführungen vorgesehen, so daß sich eine entsprechende Stabilisierung des Behälters während seiner Handhabung ergibt.

Für einen ruckfreien oder weitgehend ruckfreien Über-gang der Last des Behälters von einem oder zwei Zugelementen auf das andere Zugelement ist es vorteilhaft, wenn die beiden Zugelemente zur Verbindung des freien Endes des Schwenkarmes des Fahrzeuges mit den beiden Befestigungsstellen einer Seite des Behälters etwa gleich lang sind und wenn deren Länge sowie die Abstände der Befestigungsstellen voneinander und von der Befestigungsstelle der Zugelemente an dem Schwenkarm so aufeinander abgestimmt sind, daß zumindest das Zugelement zwischen Schwenkarm und vorderer Befestigungsstelle straff ist, während der Schwenkarm mit der Ladepritsche od. dgl. des Fahrzeuges einen spitzen Winkel bildet. Gleichzeitig wird dann der hintere bzw. untere Behälterbereich von der Langlochführung in jeweils günstigster Position gehalten. Beim Verschwenken des Schwenkarmes über 90 % gegenüber der Ladepritsche des Fahrzeuges hinaus kann die Anhängekraft von dem ersten Zugelement auf das zweite Zugelement übergehen, wobei jeweils die günstigste Position der gegenüberliegenden Behälterseite in der Langlochführung sich praktisch selbsttätig einstellen kann.

Die Längsführung für den unteren Behälterbereich ist gegen einen unteren Anschlag schwenkbar und die vorzugsweise bolzenförmige Gegenkupplung od. dgl. an dem Behälter kann bei dessen erstem Anheben vom Fahrzeug - wie bereits erwähnt - am fahrzeugnäheren Ende der Langführung angeordnet sein, wobei vorzugsweise beide Zugelemente zunächst gest rafft sind. Durch die Verwendung zweier etwa gleich langer Zugelemente, die bei waagerechtem Behälter auseinandergespreizt sind, kann so bei der ersten Anhebephase eine Belastung der Längsführung noch vermieden werden.

Die Handhabung der sehr schweren, häufig gefüllt transportierbaren Behälter wird erleichtert, wenn die etwa in der Mitte des Behälters seitlich vorstehenden Befestigungsstellen in einer durch die Schwerachse des stehenden oder vertikal angeordneten Silos verlaufenden Ebene angeordnet sind. Die seitlichen Projektionen einer Verbindungslinie der beiden Befestigungsstellen einerseits und einer Verbindungslinie der bei auf dem Fahrzeug liegenden Behälter oberen Befestigungsstelle mit der am Fahrzeugende befindlichen Gegenkupplung des Behälters andererseits können dabei etwa gleich lang sein und einen z. B. fast rechten Winkel einschließen. Dadurch ergibt sich in praktisch jeder Schwenklage des Behälters eine stabile Halterung an zwei Stellen, wobei der Übergang von einem Anhängepunkt in den anderen praktisch ruckfrei erfolgen kann.

Weitere Ausgestaltungen der Erfindung sind Gegenstand weiterer Ansprüche.

Insgesamt ergibt sich eine Behälter-Fahrzeug-Kombination, die die Verwendung schon bekannter und vorhandener, d. h. handelsüblicher Fahrzeuge für Mulden beim Transport auch gefüllter Behälter erlaubt, die liegend transportiert, aber stehend benutzt werden sollen. Gleichzeitig wird jedoch die Anhängung vereinfacht und ein drittes Zugelement mit entsprechendem dritten Anhängepunkt vermieden. Entsprechend geringer ist der konstru ktive Aufwand für die einzelnen Befestigungsstellen und Vorrichtungen sowie auch deren Handhabung, wobei die Gefahr einer Verwechslung von Zugelementen ausgeschlossen wird und nicht verschiedenartige Zugelemente zu ihrer besseren Unterscheidung gemischt angewendet werden müssen, so daß jeweils wirklich die stabilsten Zugelemente, vorzugsweise Ketten, für alle Aufhängepunkte verwendet werden können.

Nachstehend ist die Erfindung mit ihren ihr als wesentlich zugehörenden Einzelheiten anhand der Zeichnung noch näher beschrieben. Es zeigt in zum Teil schematisierter Darstellung:

Fig. 1    eine Seitenansicht eines Fahrzeuges mit einem darauf liegenden Behälter, der über zwei Aufhängepunkte mit einem Schwenkarm des Fahrzeuges auf jeder Seite verbunden ist,

Fig. 2    ein Fahrzeug gemäß Fig. 1 mit teilweise verschwenkten Schwenkarmen und entsprechend schräg angeordnetem Behälter beim Auf- oder Abladen,

Fig. 3    eine der Fig. 1 entsprechende Darstellung mit gerade abgesetztem oder gerade anzuhebendem Behälter sowie

Fig. 4    in vergrößertem Maßstab in Seitenansicht die Ausbildung der Langlochführung  zum Halten des unteren Behälterbereiches am Fahrzeugende.

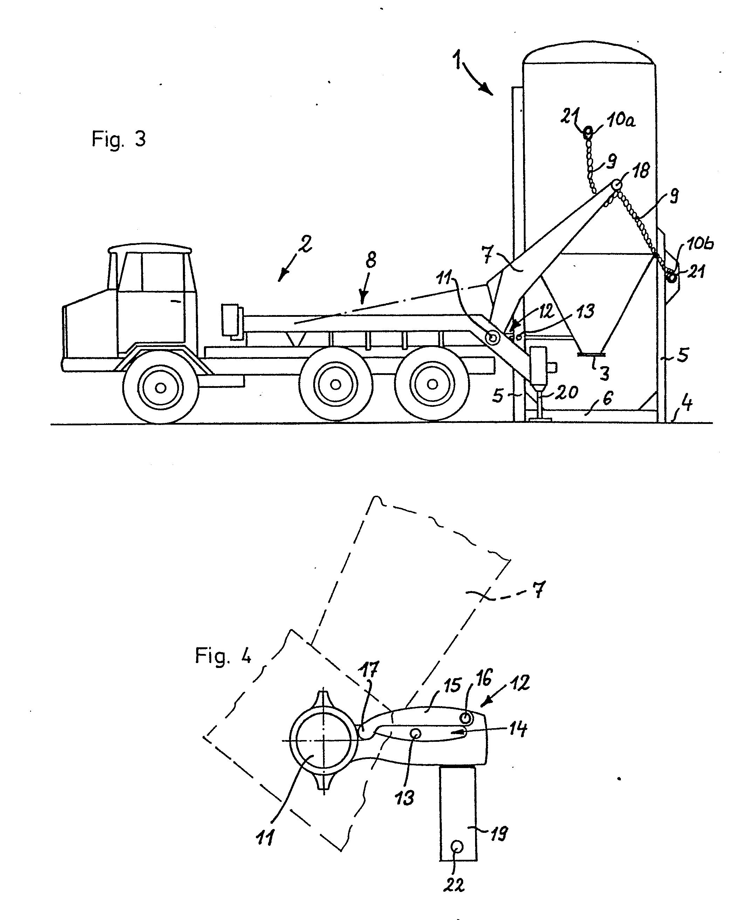

Ein Silo oder Behälter 1 kann mit Hilfe eines Lastkraftfahrzeuges 2 verfahren und transportiert werden. Der Silo 1 dient vor allem zur Aufnahme von Schüttgu t oder auch von sonstigem fließfähigem oder flüssigem Gut und hat einen in aufgestellter Position (Fig. 3) unteren Ablaß 3 sowie diesen Ablaß 3 in Abstand zur Standfläche 4 haltende Füße 5, die im Ausführungsbeispiel durch bodenseitige Verbindungsholme 6 zu einem Standgestell ausgestaltet sind.

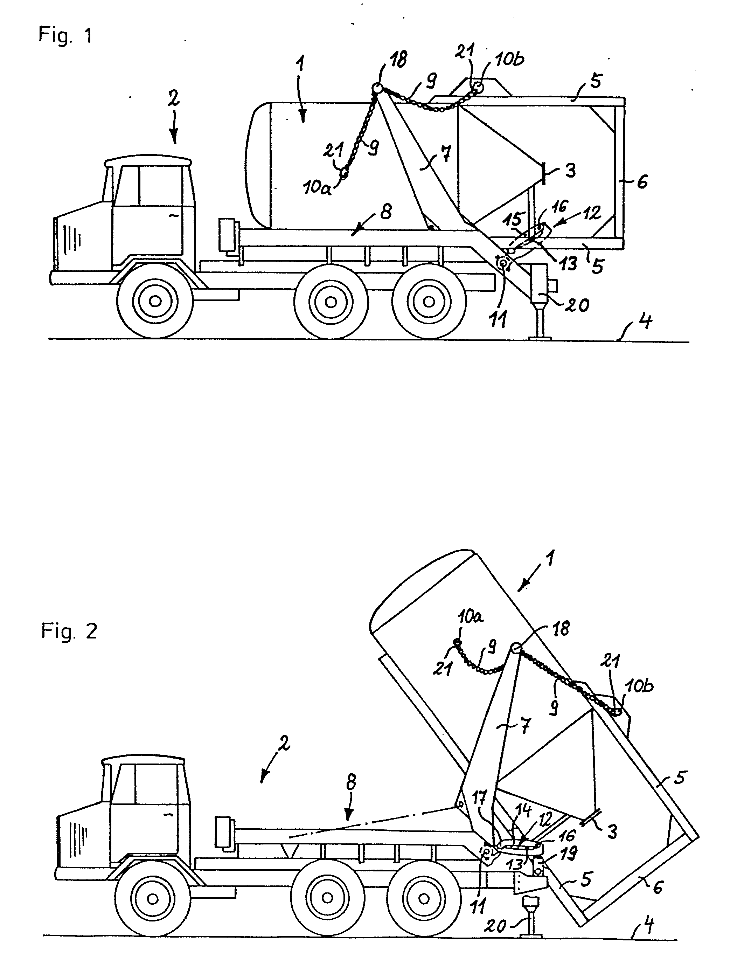

Damit das Aufnehmen und Absetzen des Silos 1 ohne zusätzliche Hebezeuge erfolgen kann, sind an dem Lastfahrzeug 2 an dessen Seiten einander gegenüberliegend parallele Schwenkarme 7 angeordnet, die in Ladeposition unter einem spitzen Winkel gegenüber der Ladefläche 8 in Fahrtrichtung schräg nach oben stehen. An diesen Schwenkarmen 7 kann der Silo 1 in noch zu beschreibender Weise mittels Zugelementen, im Ausführungsbeispiel Ketten 9, angehängt werden, wozu der Silo 1 entsprechende Aufhänge- oder Befestigungsstellen 10 a und 10 b hat. Man erkennt in Fig. 1 jeweils einen Schwenkarm 7 mit den genannten Befestigungsstellen, während auf der anderen Fahrzeugseite spiegelsymmetrisch die gleiche Anordnung vorgesehen ist.

Die Schwenkarme 7 sind um eine etwa am Ende des Fahrzeuges 2 befindliche horizontale, quer zur Fahrtrichtung angeordnete Achse 11 schwenkbar und können durch diese Schwenkbewegung den liegenden Silo oder Behälter 1 zunächst anheben und dabei auch entgegen der Fahrtrichtung etwas nach hinten bewegen und bei weiterer Verschwenkung in aufrechte Position kippen und absetzen. Dabei sind im Bereich der Schwenkachse 11 der Schwenkarme 7 im Ausführungsbeispiel zwei parallele, als Längsführungen 12 (vgl. insbesondere Fig. 4) ausgebildete Halterungen oder Kupplungen zum Erfassen einer Gegenkupplung 13 an dem Behälter unterhalb von den Aufhängepunkten 10 a und 10 b vorgesehen.

Man erkennt in den Figuren 1 bis 3, daß der Behälter oder Silo 1 an den einander gegenüberliegenden Seiten jeweils nur zwei Befestigungsstellen 10 a und 10 b zum Anbringen der Zugelemente 9 aufweist. Dabei befindet sich jeweils eine bei stehendem Behälter 1 (Fig. 3) höhere Befestigungsstelle 10 a an diesem Behälter 1 etwa in dessen Längsmitte und die zweite Anhängestelle 10 b, die bei auf dem Fahrzeug 2 liegendem Behälter 1 höher als die erste Aufhängestelle 10 a zu liegen kommt, ist in Fahrtrichtung weiter hinten als diese erste Anhängestelle angebracht. Die schon erwähnte Gegenkupplung 12 ist demgegenüber bei liegendem Behälter 1 unten.

Die etwa im Bereich einer Längsmittelebene an dem Behälter 1 einander gegenüberliegenden Befestigungsstellen 10 a stehen dabei seitlich aus dem Umriß des Behälters 1 vor und liegen einander genau auf einem Durchmesser gegenüber. Dabei sind die in aufgestellter Position des Behälters 1 am höchsten liegenden, etwa oder genau in dessen Mitte angeordneten Befestigungsstellen 10 a gegenüber den hier vorgesehenen vier Stützfüßen 5 jeweils um etwa 40 bis 50°, vorzugsweise um 45° am Umfang des Behälters versetzt angeordnet. Das bedeutet, daß bei vier am Umfang des Behälters vorzugsweise regelmäßig oder aber auch etwas versetzt angeordneten Stützfüßen die in der Behältermitte angeordneten Befestigungsstellen 10 a etwa in der Mitte zwischen zwei Stützfüßen zu liegen kommen.

Es wurde bereits erwähnt, daß die am Fahrzeugende angeordnete Halterung zum zeitweiligen Kuppeln mit dem Behälter 1 insbesondere während des Aufnehmens, Haltens und Abladens, als etwa in Fahrtrichtung bzw. eventuell auch schräg gegen den Boden 4 hinter dem Fahrzeug 2 gerichtete oder in diese Richtung schwenkbare Langlochführung 12 ausgebildet ist. In Fig. 4 erkennt man, daß diese Langlochführung 12 öffenbar ist, wobei als obere Begrenzung des Langschlitzes 14 ein auf- und zuklappbarer und in Schließstellung lösbar fixierbarer Bügel 15 vorgesehen ist. Bei geschlossenem Bügel 15 nimmt somit der Langschlitz 14 der Langlochführung 12 die bolzenartige Gegenkupplung 13 des Behälters 1 in sich auf. Wird jedoch der Bügel 15 geöffnet, kann diese Verbindung gelöst werden .

Es sei erwähnt, daß im unteren Randbereich des Behälters 1 an seiner dem Fahrzeug 2 zugewandten Seite zwei Kupplungsstellen 13 für die beiden parallelen schwenkbaren Langloc hführungen 12 vorgesehen sind. Somit ergibt sich während der Schwenkbewegung auch im unteren Silobereich, wo zeitweilig entsprechend große Kräfte auftreten, ein sicherer Halt gegen Verkippen und Verkanten. Dies ist vor allem dann vorteilhaft, wenn der Behälter einmal aus einer Position angehoben wird, bei der die rückwärtige Fahrzeugseite nicht genau parallel zur Verbindungsachse der Aufhängepunkte 10 a oder 10 b ist.

Der Verschlußbügel 15 der Langlochführung 12 ist auf der dem Fahrzeug abgewandten Seite nach oben aufschwenkbar. Dabei ist die Schwenkachse 16 für diesen Bügel 15 etwa in der Höhe der Mitte des Langloches 14 bzw. im Ausführungsbeispiel sogar darüber angeordnet, während der Verschluß 17 am entgegengesetzten Ende dieser Langlochführung 12, d. h. am fahrzeugseitigen Ende angeordnet ist. Die etwas höhere Anordnung der Schwenkachse 16 erlaubt dabei eine bessere Aussteifung insbesondere des fahrzeugfernen Endes der Langlochführung, die unter Umständen  vor allem bei schräg stehendem Behälter  die von der Gegenkupplung 13 ausgehenden Kräfte aufnehmen muß.

Anhand der Fig. 1 erkennt man, daß die beiden als Zugelemente vorgesehenen Ketten 9 zur Verbindung des freien Endes des Schwenkarmes 7 mit den beiden Befestigungsstellen 10 a und 10 b einer Seite des Behälters 1 etwa gleich lang sind und daß deren Länge sowie die Abstände der Befestigungsstellen 10 a und 10 b voneinander und von der Befestigungsstelle 18 der Zugelemente 9 an dem Schwenkarm 7 so aufeinander abgestimmt sind, daß zumindest das Zugelement 9 zwischen Schwenkarm 7  und vorderer Befestigungsstelle 10 a straff ist, während der Schwenkarm 7 mit der Ladepritsche 8 einen spitzen Winkel bildet. Beim ersten Anheben kann dabei auch das zweite Zugelement 9 gemäß Fig. 1 straff sein. Dabei liegt die Befestigungsstelle 18 zunächst höher als 10 a, später darunter, aber dann wieder höher als die Stelle 10 b.

Spätestens beim Verschwenken des Schwenkarmes 7 über 90$^{o}$ gegenüber der Ladepritsche 8 des Fahrzeuges 2 hinaus geht dann die Anhängekraft von dem ersten Zugelement auf das zweite über, wobei der Behälter gleichzeitig von der Langlochführung 12 stabil gehalten wird. Es leuchtet ein, daß der Kraftübergang auf das in Fahrtrichtung zunächst hintere Zugelement etwa dann erfolgt, wenn der vordere Befestigungspunkt 10 a über die Befestigungsstelle 18 an dem Schwenkarm 7 hinaus wandert. Für einen möglichst ruckfreien Übergang von einem Zugelement auf das andere ist es vorteilhaft, daß die Längsführung 12 für den unteren Behälterbereich bis gegen einen unteren Anschlag 19 schwenkbar ist, wobei dieser Anschlag 19 mit dem Fahrzeugaufbau verbunden ist. Die rundstahlförmige oder bolzenförmige Gegenkupplung 13 kann dabei beim ersten Anheben des Behälters oder Silos 1 vom Fahrzeug 2 am fahrzeugnäheren Ende der Langführung 12 angeordnet sein, wobei gemäß Fig. 1 beide Zugelemente gestrafft sein können. Beim ersten Anheben des Behälters 1 - bzw. auch bei seinem Absetzen in der letzten Bewegungsphase - ist dieser an beiden Zugelementen 9 hängend mit seiner Gegenkupplung 13 in der Längsführung 12 gegenüber dem Fahrzeug 2 verschiebbar, wobei er beim Anheben entgegen der Fahrtrichtung nach hinten und beim Absenken auf dem Fahrzeug entsprechend umgekehrt in der Führung 12 bewegt werden kann. Beim weiteren Hochstellen der Schwenkarme 7 ist dann die Längsführung 12 gegen deren untere Anschläge 19 absenkbar, wie es sich aus dem Vergleich der Figuren 1 bis 3 ergibt.

Vor allem in Fig. 3 erkennt man, daß die schwenkbare Längsführung 12 und deren fahrzeugfernes Ende und die Höhe der Gegenkupplung 13 an dem Behälter 1 über dessen Standfläche 4 so angeordnet sind, daß bei am Fahrzeugende ausgefahrenen Stützfüßen 20 - zur Aufnahme der Last des noch frei schwebenden Behälters 1 - und ausgeschwenktem Schwenkarm 7 die Standflächen der Silofüße 5 oder des Untergestelles 6 - bei zunächst noch gespanntem Zugelement 9 zwischen Schwenkarm 7 und hinterer Befestigungsstelle 10 b - den Boden 4 berühren. Somit ergibt sich auch beim Absetzen des Behälters 1 ein glatter und ruckfreier Übergang aus seiner aufgehängten in die abgestellte Position.

Der Schwenkarm 7 kann bei Bodenberührung des Silos 1 so weit weitergeschwenkt werden, daß alle Zugelemente 9 gelockert und aushängbar sind.

Als Befestigungsstellen 10 a und 10 b sind pilzförmige Vorsprünge vorgesehen, deren Köpfe von einer runden Form abweichen können. Bei Ketten 9 haben an ihren Enden Ösen 21, deren Innenkontur der Außenkontur der Köpfe der Vorsprünge entsprechen und bei angespannter Kette mit ihrer Kontur relativ zu dem jeweiligen Kopf verdreht sind. Ein Aushängen oder Einhängen ist also nur bei gelockerter Kette möglich, so daß ein unbeabsichtigtes Aushängen während der Verschwenkung des Behälters vermieden wird.

Der Anschlag 19 für die abschwenkbare Längsführung 12 am Fahrzeugende kann seinerseits höhenverstellbar, vorzugsweise um eine insbesondere horizontale Achse 22 abklappbar oder abschwenkbar sein. Dies kann dann vorteilhaft sein, wenn durch Bodenunebenheiten das Ein- oder Auskuppeln der Längsführung Schwierigkeiten machen könnte.

Bei abgeschwenktem Anschlag 19 kann unter Umständen nämlich die geöffnete Längsführung besser mit der Gegenkupplung 13 verbunden werden.

In den Zeichnungen wird deutlich, daß die seitlichen
Projektionen einer Verbindungslinie der beiden Befestigungsstellen 10 a und 10 b einerseits und einer Verbindungslinie der Befestigungsstelle 10 b mit der Gegenkupplung 13 etwa gleich lang sind und vorzugsweise einen
spitzen oder rechten Winkel einschließen, was zu einer
stabilen "Dreipunktbefestigung" an jeder Seite des Behälters 1 sowie zu einem guten Übergang der Last von
einem zum anderen Befestigungspunkt führt.

Die Handhabung der erfindungsgemäßen Fahrzeug-Behälter-
Kombination  ist folgende:
An einem vorzugsweise handelsüblichen Absetzkipperfahrzeug 2 wird der Silo 1 mit Hilfe der Ketten 9 an den
Punkten 10 a und 10 b verbunden. Zusätzlich wird die
Längsführung 12 mit der Gegenkupplung 13 verbunden, wobei die Langlochführung zunächst geöffnet ist und dann
geschlossen wird.

Befindet sich nach diesen Verbindungen der Silo oder Behälter 1 liegend auf dem Fahrzeug 2 und soll abgeladen
werden, wird der Schwenkarm 12 um seine im Bereich des
Fahrzeugendes befindlichen Achse 11 nach hinten verschwenkt. Dabei strafft sich zunächst die mit dem
Punkt 10 a verbundene Kette 9. Danach wird auch die
zweite Kette, die zu der Befestigungsstelle 10 b führt,
gespannt. Der Behälter würde nun waagerecht hängend nach
hinten befördert werden. Dies ist auch so weit möglich,
wie die Längsführung 12 dies zuläßt. Ist die Gegenkupplung an deren fahrzeugfernem Ende angelangt, wird durch
die weitere Bewegung des Schwenkarmes der Silo nach oben

**0079509**

bewegt, wobei dann die Kette gegenüber dem rückwärtigen Befestigungspunkt 10 b zunächst noch locker ist. Der Behälter ruht nun an den Befestigungspunkten 10 a und 13.

Bei seiner Weiterschwenkung bewegt sich die Längsführung 12 in die untere Position, bis sie auf ihrem Anschlag 19 abgestützt ist. Mit Hilfe der belasteten und gestrafften Kette erfolgt nun eine Drehung um die Gegenkupplung, wodurch der Silo in seine vertikale Position übergeht. Dabei sorgen die vorbeschriebenen geometrischen und chinematischen Verhältnisse dafür, daß bei ausgefahren en Stützfüßen 20 des Fahrzeuges 2 die Silofüße 5 den Boden berühren. Bevor dieser Zustand jedoch eingetreten ist, ist ein Lastwechsel von der einen auf die andere Kette, d. h. von der Befestigungsstelle 10 a auf die Befestigungsstelle 10 b erfolgt. Der Silo 1 wird also behutsam abgesetzt.

Sind die Ketten 9 durch weiteres Schwenken der Arme 7 locker geworden und ausgehängt und sind die Stützfüße 20 wieder eingezogen und die Längsführung 12 ausgekuppelt, kann das Fahrzeug von dem Silo wegfahren.

Die vorbeschriebene Längsführung kann auch als Zugelement, insbesondere als Kette mit einer die - sich beim Verschwenken drehende - Gegenkupplung erfassenden Öse sein.. Diese Kette ist bei auf dem Fahrzeug 2 liegendem Behälter 1 locker und wird analog der Verschiebung der Gegenkupplung gestrafft und nach einer Verschwenkung abgestützt.
Alle in der Beschreibung, den Ansprüchen und der Zeichnung dargestellten Merkmale und Konstruktionsdetails können sowohl einzeln als auch in beliebiger Kombination miteinander wesentliche Bedeutung haben.

- Zusammenfassung -

PATENTANWÄLTE
DIPL.-ING. H. SCHMITT
DIPL.-ING. W. MAUCHER

78 FREIBURG I. BR.
DREIKÖNIGSTR. 13
TELEFON: (0761)
70774

16

0079509

Firma
Mathis System-Technik GmbH
7801 Merdingen

UNSERE AKTE - BITTE STETS ANGEBEN:

E 82 455 MR

Mit einem Lastfahrzeug verfahrbarer Silo oder Behälter

Ansprüche

1. Mit einem Lastfahrzeug verfahrbarer Silo oder Behälter für Schütt-, fließfähiges oder flüssiges Gut mit einem unteren Ablaß und diesen bei aufgestelltem Behälter in Abstand zur Standfläche haltenden Füßen, einem Standgestell od. dgl., wobei der Silo an sich gegenüberliegenden Seiten jeweils Aufhänge- oder Befestigungsstellen zum Aufhängen an Schwenkarmen des Lastfahrzeuges mittels Zugelementen aufweist, so daß die Schwenkarme bei ihrer Verschwenkung um eine etwa am Ende des Fahrzeuges befindliche horizontale Achse den Silo aufnehmen und/oder absetzen können, wobei ferner im Bereich der Schwenkachse der Schwenkarme eine Halterung oder Kupplung zum Erfassen einer Gegenkupplung an dem Behälter unterhalb von den Aufhängepunkten vorgesehen ist, d a - d u r c h  g e k e n n z e i c h n e t , daß der Behälter (1) od. dgl. an den einander gegenüberliegenden Seiten jeweils nur zwei Befestigungsstellen (10 a, 10 b) zum Anbringen der Zugelemente (9) aufweist, wobei jeweils eine bei stehendem Behälter (1) höhere Befestigungsstelle (10 a) an diesem etwa in dessen Längsmitte und die zweite Anhängestelle (10 b) bei auf dem Fahrzeug (2) liegendem
Behälter (1) höher als die erste Anhängestelle
(10 a), in Fahrtrichtung jedoch weiter hinten als
diese angeordnet sind, und daß die Gegenkupplung
(12) des Behälters zum Verbinden mit dem hinteren
Fahrzeugbereich an der Seite des Behälters angeordnet ist, die bei auf dem Fahrzeug liegendem Behälter unten ist.

2. Behälter nach Anspruch 1, dadurch gekennzeichnet,
daß die etwa im Bereich einer Längsmittelebene an
dem Behälter (1) einander gegenüberliegenden Befestigungsstellen (10 a) seitlich aus dem Umriß des
Behälters (1) vorstehen und einander genau auf
einem Durchmesser gegenüber liegen.

3. Behälter nach Anspruch 1 oder 2, dadurch gekennzeichnet, daß die in aufgestellter Position des
Behälters (1) am höchsten liegenden, etwa oder genau in dessen Mitte angeordneten Befestigungsstellen (10 a) gegenüber den vorzugsweise vier Stützfüßen (5) oder gegenüber den Stützen des Untergestelles jeweils um etwa 40 bis 50$^\circ$ vorzugsweise um
45$^\circ$ am Umfang des Behälters versetzt angeordnet
sind.

4. Behälter insbesondere nach einem der Ansprüche 1
bis 3, dadurch gekennzeichnet, daß die am Fahrzeugende angeordnete Halterung zum zeitweiligen Kuppeln
mit dem Behälter insbesondere während des Aufnehmens, Haltens und Abladens als etwa in Fahrtrichtung bzw. schräg gegen den Boden hinter dem Fahrzeug gerichtete oder in diese Richtung schwenkbare
Führung, insbesondere Langlochführung (12) ausgebildet ist.

5.  Behälter nach Anspruch 4, dadurch gekennzeichnet, daß die Langlochführung (12) für die untere, fahrzeugnahe Befestigung des Behälters zum Ein- und Auskuppeln öffenbar ist, insbesondere als obere Begrenzung des Langschlitzes (14) einen auf- und abklappbaren und in Schließstellung lösbar fixierbaren Bügel (15) aufweist.

6.  Behälter nach einem der Ansprüche 1 bis 5, dadurch gekennzeichnet, daß im unteren Randbereich des Behälters (1) an seiner dem Fahrzeug (2) zugewandten Seite zwei Kupplungsstellen für zwei vorzugsweise parallele schwenkbare Langlochführungen (12) vorgesehen sind.

7.  Behälter nach einem der Ansprüche 1 bis 6, dadurch gekennzeichnet, daß der Verschlußbügel (15) der Langlochführung (12) zum Erfassen des unteren Behälterbereiches auf der dem Fahrzeug abgewandten Seite na ch oben aufschwenkbar angeordnet ist.

8.  Behälter nach einem der Ansprüche 1 bis 7, dadurch gekennzeichnet, daß die Schwenkachse (16) für den die obere Begrenzung der Langlochführung (12) bildenden Bügel (15) etwa in der Höhe der Mitte der Langlochführung oder darüber sitzt und daß der Verschluß (17) am entgegengesetzten Ende der Langlochführung, d. h. am fahrzeugseitigen Ende, angeordnet ist.

9.  Behälter nach einem der Ansprüche 1 bis 8, dadurch gekennzeichnet, daß die beiden Zugelemente zur Verbindung des freien Endes des Schwenkarmes mit den beiden Befestigungsstellen einer Seite des Behälters (1) etwa gleich lang sind und daß deren Länge sowie die Abstände der Befestigungsstellen (10 a, 10 b) voneinander und von der Befestigungsstelle (18) der Zugelemente (9) an dem Schwenkarm (7) so aufeinander abgestimmt sind, daß zumindest das Zugelement (9) zwischen Schwenkarm (7) und vorderer Befestigungsstelle (10 a) straff ist, während der Schwenkarm mit der Ladepritsche od. dgl. des Fahrzeuges einen spitzen Winkel bildet.

10. Behälter nach einem der Ansprüche 1 bis 9, dadurch gekennzeichnet, daß beim Verschwenken des Schwenkarmes (7) über 90° gegenüber der Ladepritsche (8) des Fahrzeuges (2) hinaus die Anhängekraft von dem ersten Zugelement auf das zweite Zugelement übergeht.

11. Behälter nach einem der vorstehenden Ansprüche, dadurch gekennzeichnet, daß die Längsführung (12) für den unteren Behälterbereich bis gegen einen unteren Anschlag (19) schwenkbar ist und daß die vorzugsweise bolzenförmige Gegenkupplung od. dgl. an dem Behälter (1) bei dessen erstem Anheben vom Fahrzeug (2) am fahrzeugnäheren Ende der Langführung (12 ) angeordnet ist, wobei vorzugsweise beide Zugelemente zunächst gestrafft sind.

12. Behälter nach einem der Ansprüche 1 bis 11, dadurch gekennzeichnet, daß beim ersten Anheben des Behälters (1) dieser an beiden Zugelementen (9) hängend mit seiner Gegenkupplung (13) in der Längsführung (12) gegenüber dem Fahrzeug (2) nach hinten verschiebbar und beim weiteren Hochstellen der Schwenkarme die Längsführung gegen deren unteren

2o

0079509

Anschlag absenkbar ist.

13. Behälter nach einem der Ansprüche 1 bis 12, dadurch gekennzeichnet, daß die schwenkbare Längsführung (12) und deren fahrzeugfernes Ende und die Höhe der Gegenkupplung (13) an dem Behälter (1) über dessen Standfläche (4) so angeordnet sind, daß bei am Fahrzeugende ausgefahrenen Stützfüßen und ausgeschwenktem Schwenkarm (7) die Standflächen der Silofüße (5) oder des Untergestelles (6) bei zunächst noch gespanntem Zugelement (9) zwischen Schwenkarm (7) und hinterer Befestigungsstelle (10 b) zwischen Schwenkarm (7) und hinterer Befestigungsstelle (10 b) den Boden (4) berühren.

14. Behälter nach einem der Ansprüche 1 bis 13, dadurch gekennzeichnet, daß der Schwenkarm (7) bei Bodenberührung des Silos (1) so weit weiterschwenkbar ist, daß alle Zugelemente (9) gelockert und aushängbar sind.

15. Behälter nach einem der Ansprüche 1 bis 14, dadurch gekennzeichnet, daß als Zugelemente Ketten vorgesehen sind.

16. Behälter nach einem der Ansprüche 1 bis 15, dadurch gekennzeichnet, daß als Befestigungsstellen (10 a, 10 b) pilzförmige Vorsprünge vorgesehen sind, deren Köpfe von einer runden Form abweichen, und daß die Ketten (9) an ihren Enden Ösen (21) haben, deren Innenkontur der Außenkontur der Köpfe der Vorsprünge entsprechen und bei angespannter Kette mit ihrer Kontur relativ zu dem jeweiligen Kopf verdreht sind.

# 0079509

17. Behälter nach einem der Ansprüche 1 bis 16, dadurch gekennzeichnet, daß der Anschlag (19) für die abschwenkbare Längsführung (12) am Fahrzeugende seinerseits höhenverstellbar, vorzugsweise um eine insbesondere horizontale Achse (22) abklappbar oder abschwenkbar ist.

18. Behälter nach einem der Ansprüche 1 bis 17, dadurch gekennzeichnet, daß die etwa in der Mitte des Behälters seitlich vorstehenden Befestigungsstellen in einer durch die Schwerachse des stehenden oder vertikal angeordneten Silos verlaufenden Ebene angeordnet sind.

19. Behälter nach einem der vorstehenden Ansprüche, dadurch gekennzeichnet, daß die seitlichen Projektionen einer Verbindungslinie der beiden Befestigungsstellen (10 a, 10 b) einerseits und einer Verbindungslinie der bei auf dem Fahrzeug liegenden Behälter oberen Befestigungsstelle (10 b) mit der am Fahrzeugende befindlichen Gegenkupplung (13) des Behälters andererseits etwa gleich lang sind und vorzugsweise einen spitzen Winkel von vorzugsweise mehr als 60 bis nahezu 90° oder einen rechten Winkel einschließen.

20. Behälter nach einem der vorstehenden Ansprüche, dadurch gekennzeichnet, daß als Längsführung am Fahrzeugende ein Zugelement, vorzugsweise eine Kette, vorgesehen ist.

- Beschreibung -

Fig. 1

Fig. 2

Fig. 3

Fig. 4

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,P | DE-A-3 041 011 (RIGIPS)<br><br>* Ansprüche 1,2; Figuren * | 1-4,9, 10,13-15 | B 65 D 88/30<br>B 60 P 1/48 |
| A | FR-E- 68 700 (OFFRAY)<br>* Seite 2, Spalte 2, Zeile 4 - Seite 3, Spalte 1, Zeile 8; Figuren 4-6 * | 1 | |
| A | US-A-2 954 885 (SEXTON)<br>* Spalte 2, Zeile 43 - Spalte 4, Zeile 55; Figuren * | 1,10 | |
| A | CH-A- 546 657 (WIRZ)<br>* Spalte 2, Zeilen 6-17; Figuren * | 15 | |
| | | | RECHERCHIERTE SACHGEBIETE (Int. Cl. ³) |
| A | GB-A- 694 545 (DEMPSTER BROTHERS)<br>* Seite 2, Zeilen 53-74; Figuren * | 16 | B 65 G<br>B 65 D<br>B 60 P<br>B 28 C |
| D,A | DE-B-2 148 048 (KNAUF) | | |

Der vorliegende Recherchenbericht wurde für alle Patentansprüche erstellt.

| Recherchenort<br>DEN HAAG | Abschlußdatum der Recherche<br>15-02-1983 | Prüfer<br>VAN ROLLEGHEM F.M. |
|---|---|---|